# NEUE EUROPÄISCHE PATENTSCHRIFT

(11) **EP 0 644 089 B2**
(45) Veröffentlichungstag und Bekanntmachung des Hinweises auf die Entscheidung über den Einspruch: **04.08.1999**
(45) Hinweis auf die Patenterteilung: 20.11.1996
(21) Anmeldenummer: 94113246.6
(22) Anmeldetag: 24.08.1994
(51) Int. Cl.: B60R 22/18, B60R 22/46

(54) **Antriebsvorrichtung**
Drive device
Dispositif d'actionnement

(30) Priorität: 22.09.1993 DE 4332206
(43) Veröffentlichungstag der Anmeldung: 22.03.1995
(73) Patentinhaber: HS Technik und Design Technische Entwicklungen GmbH, 82234 Wessling (DE)
(72) Erfinder: Specht, Martin, Dipl.-Ing.FH, D-82430 Feldafing (DE)
(74) Vertreter: Nöth, Heinz, Dipl.-Phys.

(56) Entgegenhaltungen:
- EP-A- 0 093 237
- EP-A- 0 560 181
- EP-A- 0 567 113
- EP-A- 0 600 689
- DE-A- 2 249 786
- FR-A- 2 212 798
- FR-A- 2 218 909
- FR-A- 2 460 407
- FR-A- 2 491 340
- US-A- 4 385 775

## Beschreibung

Die Erfindung betrifft eine Vorrichtung zum Straffen eines Fahrzeugsicherheitsgurtes nach dem Oberbegriff des Patentanspruches 1.

Bei einer derartigen aus der EP-A-0 560 181 bekannten Antriebsvorrichtung zum Straffen eines Fahrzeugsicherheisgurtes wird ein in einem Führungsrohr geführter Kolben von einem im Kolben angeordneten Gasgenerator angetrieben. Der Kolben ist über ein Zugmittel mit einem anzutreibenden Teil verbunden. Im Kolben wird von einem Gasgenerator ein Treibgas erzeugt, das durch wenigstens eine Austrittsöffnung im Kolben, in einen im Führungsrohr gebildeten Druckraum austritt. Der Gasgenerator besitzt eine in den Kolbeninnenraum gerichtete Treibmittelaustrittsseite, die durch den gezündeten Treibmittelsatz im Gasgenerator geöffnet wird. Der Kolbeninnenraum dient dabei als Brennraum für aus dem Gasgenerator austretendes Treibmittel. Bei dieser Vorrichtung bildet das Führungsrohr einen Teil der beweglichen trägheitssensitiven Sensormasse, welche die Aktivierung des Gasgenerators verursacht.

Bei einer aus der DE-A-22 49 786 bekannten Vorrichtung wird in einem ortsfesten Führungsrohr ein Kolben geführt, der mit einem von einem im Kolben angeordneten Gasgenerator erzeugten Treibgas angetrieben wird. Der Kolben ist über ein Zugmittel mit dem Sicherheitsgurt verbindbar. Im Führungsrohr ist ein Druckraum gebildet, in welchem das im Kolbeninnern erzeugte Treibgas durch wenigstens eine Austrittsöffnung austritt. Bei dieser Vorrichtung befindet sich eine Rücklaufsperre an der Außenseite des Führungsrohres.

Aufgabe der Erfindung ist es, eine Vorrichtung der eingangs genannten Art zu schaffen, bei der ein kompakter Aufbau erreicht wird und eine nur geringe Anzahl an zusammenzumontierenden Bauteilen erforderlich ist.

Diese Aufgabe wird erfindungsgemäß durch die kennzeichnenden Merkmale des Patentanspruches 1 gelöst.

Eine Verringerung der zusammenzubauenden Einzelteile und eine Einsparung an Raumbedarf ergibt sich dadurch, daß am Kolben eine Rücklaufsperre vorgesehen ist, die zum Sperren der Kolbenbewegung entgegen der Antriebsrichtung mit der Innenwand des Führungsrohres in bewegungssperrenden Eingriff gebracht werden kann. Auf diese Weise hat das Führungsrohr eine weitere Funktion, nämlich als Bremsrohr, welches an seiner Innenwand mit der Rücklaufsperre zusammenwirkt. Die Rücklaufsperre ist in Antiebsrichtung am Kolbenende vorgesehen. Der Gasgenerator kann an seiner in das Kolbeninnere bzw. in den Brennraum gerichteten Seite mit einem Berstboden ausgebildet sein, wie er beispielsweise in der DE-A-42 28 696 oder der EP-A-0 567 113 (Veröffentlichungstag 27.10.1993) beschrieben ist.

Ferner kann der Gasgenerator in der Weise ausgebildet sein, daß das Gas in mindestens zwei Stufen aus dem Gasgenerator austritt, wobei das während der ersten Stufe austretende Gas eine gegenüber dem Gas der nachfolgenden zweiten Stufe bzw. den nachfolgenden Stufen verringerte Antriebsbewegung auf den Kolben ausübt. Ein derartiger pyrotechnischer Gasgenerator ist in der DE-A 42 28 696 beschrieben. Hierdurch läßt sich eine gesteuerte Druckverlaufabstimmung mit verringerter Belastung der zu bewegenden Bauteile erreichen. Auf die ruhende Masse der zu bewegenden Bauteile wird zunächst eine anschiebende Wirkung in der ersten Antriebsstufe ausgeübt. In der nachfolgenden Stufe bzw. den nachfolgenden Stufen wird durch erhöhte Explosionsgeschwindigkeit der endgültige Druckaufbau erzeugt. Hierdurch erreicht man auch an dem zu bewegenden Teil des Sicherheitsgurtes geringere Belastungen bei der Beschleunigung.

Die Antriebsvorrichtung kann mit schonender Zugbelastung innerhalb eines kurzen Zeitraums, z.B. im Millisekundenbereich, einen Sicherheitsgurt in einem Fahrzeug aus einer Normalposition in eine zurückgezogene Position bringen.

Am Kolbenende ist in bevorzugter Weise auch das Zugmittel fest mit dem Kolben, insbesondere über eine Seilverpresserung mit verbreitertem Querschnitt, mit dem Kolben verbunden. Auf diese Weise werden auf das Zugmittel einwirkende Kräfte mit kurzem Kraftflußweg in das am Fahrzeug abgestützte Führungsrohr geleitet.

Anhand der Figuren wird an Ausführungsbeispielen die Erfindung noch näher erläutert. Es zeigt:
- Fig 1: eine schnittbildliche Darstellung eines ersten Ausführungsbeispiels einer Antriebsvorrichtung; und
- Fig. 2: eine schnittbildliche Darstellung eines zweiten Ausführungsbeispiels der Antriebsvorrichtung.

Die in den Figuren dargestellte Antriebseinrichtungen besitzen ein Führungsrohr 7, in welchem ein von einem Treibgas angetriebener Kolben 2 geführt wird. Für den Antrieb des Kolbens 2 ist im Kolbeninnern ein Gasgenerator 1 angeordnet. In Antriebsrichtung (Pfeil A) des Kolbens 2 befindet sich der Gasgenerator 1 am vorderen Ende des Kolbens 2. Der Gasgenerator 1 kann so ausgebildet sein, wie es in der EP-A 0 567 113 beschrieben ist, d.h. der Gasgenerator 1 besitzt an seiner Treibmittelaustrittsseite 3 einen Berstboden 20. Dieser Boden öffnet sich beim Zünden des Gasgenerators 1. Das Treibmittel kann dann in einen Kolbeninnenraum 4 austreten. Dieser Kolbeninnenraum 4 ist als Brennraum ausgebildet. In diesem Brennraum erfolgt die Verbrennung des explodierenden Treibmittels.

Der Gasgenerator kann ferner zweistufig ausgebildet sein, wie es in der DE-A-42 28 696 beschrieben ist, d.h. der Gasgenerator besitzt als Treibmittel Explosionsstoffe mit unterschiedlichen Explosionsgeschwindigkeiten, wobei das Gas der ersten Stufe bereits hauptsächlich durch einen oder mehrere Explosivstoffe der Zündeinrichtung gebildet sein können. Die Zündung kann bevorzugt mit Hilfe einer elektrischen Zündeinrichtung 14 mit Stromzuführung 22 erfolgen. Es ist natürlich auch eine mechanische Zündung möglich.

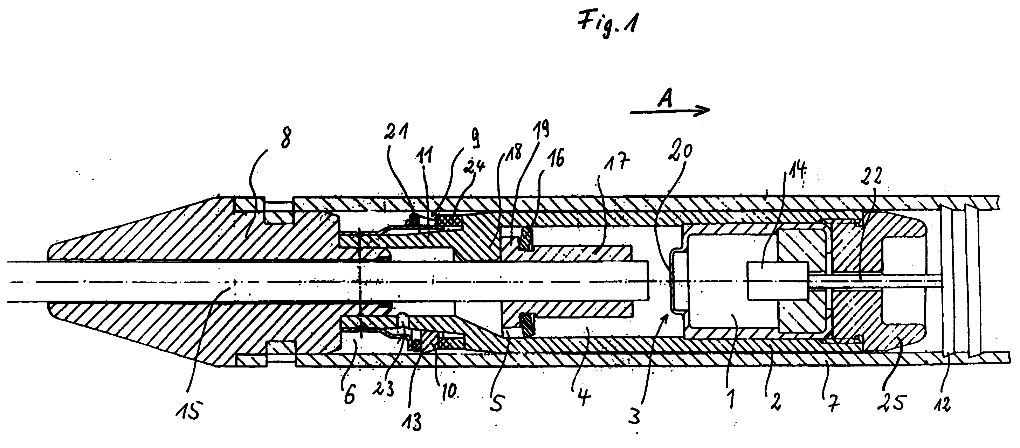

Der als Brennraum dienende Kolbeninnenraum 4 dient gleichzeitig zur Aufnahme einer Seilverpressung 17, welche gegenüber dem Durchmesser des als Zugmittel 15 dienenden Zugseiles einen verbreiterten Durchmesser aufweist. Die Seilverpressung 17 besitzt ferner einen Abstützring 19, der an der Innenseite am Kolbenboden 18 auch in der Ruhestellung fest anliegt (Fig. 1). In der Seilverpressung 17, insbesondere im Abstutzring 19, befindet sich eine oder mehrere Ausnehmungen (Austrittöffnungen) 5, durch welche die im Kolbeninnenraum 4 gebildeten Treibgase austreten. Sie gelangen in einen Druckraum 6. Der Kolbeninnenraum 4, welcher zur Aufnahme der Seilverpressung 17 dient, wirkt gleichzeitig als Verbrennungsraum, in welchen die Treibmittelausstrittsseite 3 des Gasgenerators 1 gerichtet ist.

Am von der Antriebsrichtung A gesehen rückwärtigen Ende des Kolbens 2 befindet sich eine Rücklaufsperre 9. Die Rücklaufsperre 9 besitzt in Fig. 1 ein expandierbares Sperrelement 10, das beim Ausführungsbeispiel aus mehreren z.B. drei Ringsegmenten besteht. Es kann auch als Sprengring ausgebildet sein. Dieses Sperrelement 10 ist an einem konischen Ansatzstück 11 geführt. Das konische Ansatzstück 11 ist an der Außenseite des Kolbenbodens 18 angeformt. Das konische Ansatzstück 11 ist hohl ausgebildet. Sein Innenraum steht über Leckageöffnungen 23 mit dem Druckraum 6 in Verbindung, in den die Austrittsöffnung bzw. Austrittsöffnungen 5 gerichtet sind. In der Ruheposition ist das konische Ansatzstück 11 an einem Verschlußelement 8 des Führungsrohres 7 abgestützt. Dieses Verschlußelement kann als Kunststoffstöpsel ausgebildet sein und ein Filter für Abbrandrückstände bilden. Auch das andere Rohrende kann mit einem solchen Verschlußelement ausgestattet sein. Das Sperrelement 10 kann mit Hilfe eines umlaufenden Federelementes 21 am konischen Ansatzstück 11 geführt sein und gegen ein umlaufendes Gummipolster 24 anliegen.

Das Sperrelement 10 ist in der Weise ausgebildet, daß es in Antriebsrichtung A frei führbar entlang der Innenwand des Führungsrohres 7 geführt werden kann. Entgegen der Antriebsrichtung A wird das Sperrelement 10 durch das konische Ansatzstück 11 ausgeweitet und kommt in bewegungssperrenden Eingriff mit der Innenwand des Führungsrohres. Hierzu kann der Sperring bevorzugt eine spitz zulaufende Eingriffskante 13 aufweisen. Zur Unterstützung des bewegungshemmenden Eingriffes des Sperrelements 10 in das Führungsrohr 7 können an der Innenwand des Führungsrohres zusätzliche umlaufende Rillen 12 eingeformt sein. Der Querschnitt dieser umlaufenden Rillen 12 ist so ausgebildet, daß die spitz zulaufende Eingriffskante 13 am Sperrelement mit Form- und Kraftschluß eingreifen kann. In Bewegungsrichtung A gesehen besitzt das Sperrelement, ausgehend von der umlaufenden spitzen Kante 13 eine abgeschrägte Umfangsfläche. Hierdurch wird die freie Führbarkeit des Sperrelements in Bewegungsrichtung A beim dargestellten Ausführungsbeispiel erreicht.

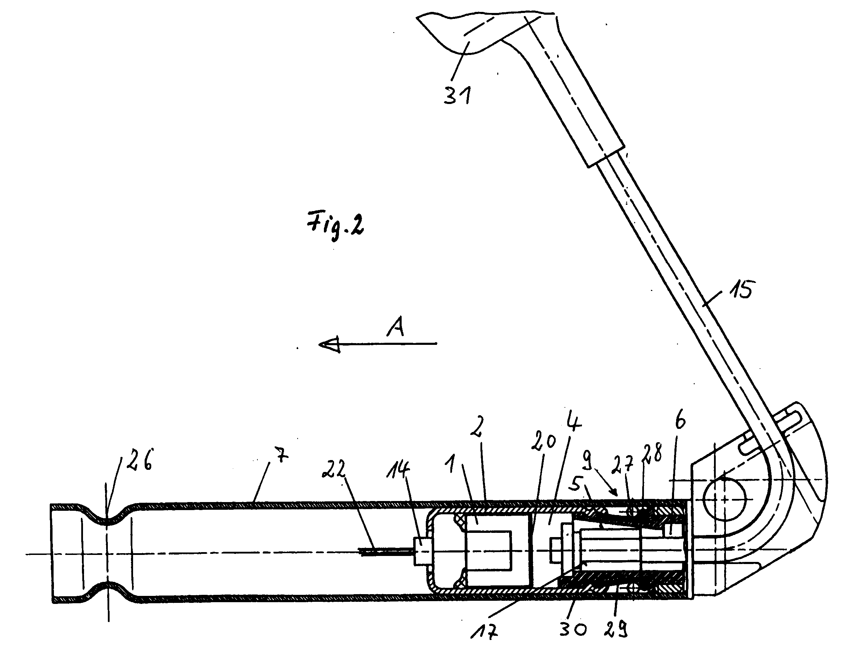

Das als Zugseil ausgebildete Zugmittel 15 ist durch das Verschlußelement 8 zum zu bewegenden Bauteil geführt. Für eine Begrenzung der Antriebsbewegung des Kolbens 2 ist im Führungsrohr 7 am Rohrende eine Verengung 26 (Fig. 2) vorgesehen. In diese Verengung 26 läuft der Kolben 2 mit seinem vorderen konisch geformten Teil 25 ein, wird gebremst und angehalten. Wie schon erläutert, wird der gestraffte Zustand durch die Rücklaufsperre 9, welche mit der Innenwand des Führungsrohres 7 in bewegungssperrenden Eingriff kommt, beibehalten. Auf das Zugmittel 15 wirkende Kräfte werden von der am Kolben 2 abgestützten Seilverpressung 17 aufgenommen und auf kurzem Weg über den Kolbenboden und die Rücklaufsperre 9 in das Rohr 7 geleitet. Das Rohr 7 ist ortsfest, z.B. an einem Fahrzeugaufbau, abgestützt.

Wenn der Kolben 7 abgebremst ist, bewegt sich aufgrund ihrer trägen Masse die Seilverpressung 17 mit dem damit verbundenen Zugmittel 15 in Antriebsrichtung A im Kolben weiter. Beim dargestellten Ausführungsbeispiel ist zwischen der Seilverpressung 17, welche die Verbindung zwischen dem Kolben 7 und dem Zugmittel 15 herstellt, eine Bremse 16 in Form einer Tellerfeder vorgesehen. Durch diese Bremse 16 wird die Seilverpressung 17 bei ihrer Weiterbewegung in Antriebsrichtung A abgebremst. Auf diese Weise erreicht man eine doppelstufige Abbremsung am Ende der Antriebsbewegung.

Bei dem in der Fig. 2 dargestellten Ausführungsbeispiel besteht die Rücklaufsperre 9, welche auch als Rücklaufbremse wirken kann, aus Rollkörpern (Kugeln) 27, die in ihrer Normalposition an einem Ring 28 aus elastischem Material anliegen. Die Rollkörper 27 sind in einem sich verjüngenden ringförmigen den Kolben umfassenden Raum gehalten. An der Innenseite besitzt dieser Raum eine abgeschrägte Mantelfläche. Diese wird gebildet durch harte Schalen 29, welche einen Kolbenteil 30 aus weicherem Material, beispielsweise aus einer Aluminiumlegierung, umfassen. Die andere ringförmige Begrenzung wird gebildet durch die Innenfläche des Führungsrohres 7.

Wenn der Kolben bei seinem Antrieb in Richtung des Pfeiles A bewegt wird, verbleiben die Rollkörper 27 an der in der Fig. 2 gezeigten Position. Zur Verhinderung eines Rücklaufs des Kolbens 2 verschieben sich die Rollkörper 27 entlang der schrägen Flächen auf den harten Schalen 29 und wirken in dem sich verengenden Raum als Klemmkörper. Gegebenenfalls können sie hierbei auch verformend auf die Innenwand des Rohres 7 einwirken und als Bremse dabei wirken.

Das als Zugseil ausgebildete Zugmittel 15 ist mit einem teilweise dargestellten Gurtschloß 31 eines Sicherheitsgurtes in einem Kraftfahrzeug verbunden. Durch den angetriebenen Kolben 2 kann das Gurtschloß beispielsweise um eine Strecke von 80 mm zurückgezogen werden, so daß der Sicherheitsgurt am Körper des Fahrzeuginsassen gestrafft wird.

## Patentansprüche

1. Antriebsvorrichtung zum Straffen eines Fahrzeugsicherheitsgurtes mit einem Führungsrohr (7), einem im Führungsrohr geführten Kolben (2), der von einem im Kolben angeordneten Gasgenerator (1) antreibbar ist, einem Zugmittel (15), welches den Kolben mit einem anzutreibenden Teil verbindet, und einem im Führungsrohr gebildeten Druckraum, in welchem ein im Kolbeninnern vom Gasgenerator erzeugtes Treibgas durch Wenigstens eine Austrittsöffnung im Kolben austritt, wobei der Gasgenerator (1) eine in einen Kolbeninnenraum gerichtete Treibmittelaustrittsseite aufweist, die durch den gezündeten Treibmittelsatz im Gasgenerator geöffnet wird, und der Kolbeninnenraum als Brennraum für aus dem Gasgenerator austretenden Treibmittel ausgebildet ist,
dadurch **gekennzeichnet,**
daß das Führungsrohr (7) ortsfest abgestützt ist und daß in Antriebsrichtung am Kolbenende eine Rücklaufsperre (9) vorgesehen ist, die zum Sperren einer Kolbenbewegung entgegen der Antriebsrichtung mit der Innenwand des Führungsrohres (7) in einen die Kolbenbewegung sperrenden Eingriff bringbar ist.

2. Vorrichtung nach Anspruch 1, dadurch gekennzeichnet, daß der Druckraum (6) am Ende des Führungsrohres (7) durch ein Verschlußelement (8) abgeschlossen ist, das als Filter für Abbrandrückstände ausgebildet ist.

3. Vorrichtung nach Anspruch 1 oder 2, dadurch gekennzeichnet, daß die Rücklaufsperre (9) ein ein bezüglich der Achse des Führungsrohres (7) radial expandierbares Sperrelement (10) aufweist, das an einem konischen Ansatzstück (11) des Kolbens (2) geführt ist derart, daß das Sperrelement (10) in Antriebsrichtung an der Innenwand des Führungsrohres (7) frei führbar ist und bei einer entgegen der Antriebsrichtung gerichteten Kolbenbewegung durch das konische Ansatzstück (11) für einen sperrenden Eingriff mit der Innenwand des Führungsrohres (7) aufweitbar ist.

4. Vorrichtung nach Anspruch 3, dadurch gekennzeichnet, daß das konische Ansatzstück (11) hohl ausgebildet ist, und die wenigstens eine Austrittsöffnung (5) umfaßt.

5. Vorrichtung nach Anspruch 3 oder 4, dadurch gekennzeichnet, daß die Innenwand des Führungsrohres (7) umlaufende Rillen (12) aufweist, mit denen das aufgeweitete Sperrelement (10) in Eingriff bringbar ist.

6. Vorrichtung nach einem der Ansprüche 3 bis 5, dadurch gekennzeichnet, daß das Sperrelement (10) eine spitze Kante (13) aufweist, die mit der Innenwand des Führungsrohres (7) beim Aufweiten des Ringes in Eingriff kommt.

7. Vorrichtung nach einem der Ansprüche 3 bis 6, dadurch gekennzeichnet, daß das Sperrelement (10) mit Vorspannung auf dem konischen Ansatzstück (11) aufsitzt.

8. Vorrichtung nach einem der Ansprüch 1 bis 7, dadurch gekennzeichnet, daß der Gasgenerator (1) in der Weise ausgebildet ist, daß das Treibgas in mindestens zwei Stufen austritt, wobei das während der ersten Stufe austretende Gas eine gegenüber dem Gas der nachfolgenden zweiten Stufe bzw. nachfolgenden Stufen verringerte Antriebswirkung auf den Kolben (2) ausübt.

9. Vorrichtung nach einem der Ansprüche 1 bis 8, dadurch gekennzeichnet, daß der Gasgenerator (1) eine elektrische Zündeinrichtung (14) aufweist.

10. Vorrichtung nach einem der Ansprüche 1 bis 9, dadurch gekennzeichnet, daß das Zugmittel (15) als Zugseil ausgebildet ist und über eine Seilverpressung (17), welche einen größeren Durchmesser als das Zugseil aufweist, fest am Kolben (2) abgestützt ist.

11. Vorrichtung nach einem der Ansprüche 1 bis 10, dadurch gekennzeichnet, daß der Kolben (7) im Normalbetrieb am Verschlußelement (8) abgestützt ist.

12. Vorrichtung nach Anspruch 10, dadurch gekennzeichnet, daß die wenigstens eine Austrittsöffnung (5) durch eine Ausnehmung in einem an die Seilverpressung (17) angeformten Abstützring (19), der am Kolbenboden im Kolbeninnern fest abgestützt ist, angeordnet ist.

13. Vorrichtung nach einem der Ansprüche 3 bis 12, dadurch gekennzeichnet, daß das konische Ansatzstück (11) außen am Kolbenboden (18) angeformt ist.

14. Vorrichtung nach einem der Ansprüche 1 bis 13, dadurch gekennzeichnet, daß am Ende der Antriebsbewegung des Kolbens (7) das Zugmittel (15) am Kolben in Antriebsrichtung gebremst weiter bewegbar geführt ist.

15. Vorrichtung nach Anspruch 14, dadurch gekennzeichnet, daß zwischen Kolben (7) und Seilverpressung (17) eine Bremse (16) vorgesehen ist, welche die Weiterbewegung des Zugmittels (15) gegenüber dem angehaltenen Kolben (7) abbremst.

## Claims

1. A drive apparatus for tightening a vehicle safety belt comprising a guide tube (7), a piston (2) which is guided in the guide tube and which is drivable by a gas generator (1) arranged in the piston, a pulling means (15) which connects the piston to a portion to be driven, and a pressure chamber which is formed in the guide tube and into which a propellent gas produced in the interior of the piston by the gas generator issues through at least one outlet opening in the piston, wherein the gas generator (1) has a propellant outlet side which is directed into an internal space in the piston and which is opened by the fired propellant in the gas generator, and the internal space in the piston is in the form of a combustion chamber for the propellant issuing from the gas generator, characterised in that the guide tube (7) is stationarily supported and that provided at the piston end in the drive direction is a return motion blocking means (9) which for blocking a piston movement in the opposite direction to the drive direction can be brought into engagement with the inside wall of the guide tube (7), to block the piston movement.

2. Apparatus according to claim 1 characterised in that the pressure chamber (6) is closed off at the end of the guide tube (7) by a closure element (8) which is in the form of a filter for firing residues.

3. Apparatus according to claim 1 or claim 2 characterised in that the return motion blocking means (9) has a blocking element (10) which is radially expandable relative to the axis of the guide tube (7) and which is guided on a conical projection portion (11) of the piston (2) in such a way that the blocking element (10) can be freely guided in the drive direction against the inside wall of the guide tube (7) and in the case of a piston movement which is directed in the opposite direction to the drive direction can be expanded by the conical projection portion (11) for locking engagement with the inside wall of the guide tube (7).

4. Apparatus according to claim 3 characterised in that the conical projection portion (11) is hollow and includes the at least one outlet opening (5).

5. Apparatus according to claim 3 or claim 4 characterised in that the inside wall of the guide tube (7) has peripherally extending grooves (12) with which the expanded blocking element (10) can be brought into engagement.

6. Apparatus according to one of claims 3 to 5 characterised in that the blocking element (10) has a pointed edge (13) which comes into engagement with the inside wall of the guide tube (7) upon expansion of the ring.

7. Apparatus according to one of claims 3 to 6 characterised in that the blocking element (10) is carried in a biased condition on the conical projection portion (11).

8. Apparatus according to one of claims 1 to 7 characterised in that the gas generator (1) is so designed that the propellent gas issues in at least two stages, wherein the gas which issues during the first stage exerts a drive action on the piston (2) which is reduced relative to the gas of the subsequent second stage or subsequent stages.

9. Apparatus according to one of claims 1 to 8 characterised in that the gas generator (1) has an electrical firing device (14).

10. Apparatus according to one of claims 1 to 9 characterised in that the pulling means (15) is in the form of a tension cable and is fixedly supported on the piston (2) by way of a cable pressing portion (17) which is of a larger diameter than the tension cable.

11. Apparatus according to one of claims 1 to 10 characterised in that in normal operation the piston (7) is supported against the closure element (8).

12. Apparatus according to claim 10 characterised in that the at least one outlet opening (5) is provided by an orifice in a support ring (19) which is formed on the cable pressing portion (17) and which is fixedly supported against the piston end portion in the interior of the piston.

13. Apparatus according to one of claims 3 to 12 characterised in that the conical projection portion (11) is formed externally on the piston end portion (18).

14. Apparatus according to one of claims 1 to 13 characterised in that at the end of the drive movement of the piston (7) the pulling means (15) is guided to be further movable on the piston in the drive direction with a braking effect.

15. Apparatus according to claim 14 characterised in that provided between the piston (7) and the cable pressing portion (17) is a brake (16) which brakes the further movement of the pulling means (15) relative to the stopped piston (7).

## Revendications

1. Dispositif d'actionnement pour la tension d'une ceinture de sécurité de véhicule avec un tuyau de guidage (7), un piston (2) guidé dans le tuyau de guidage, gui peut être entraîné par un générateur de gaz (1) disposé dans le piston, des moyens de traction (15), lesquels relient le piston à une partie à entraîner, et un compartiment de pression formé dans le tuyau de guidage, dans lequel un gaz propulseur généré à l'intérieur du piston par le générateur de gaz sort par au moins un orifice de sortie dans le piston, le générateur de gaz (1) présentant un côté sortie d'agent propulseur dirigé dans un compartiment intérieur de piston qui est ouvert par l'agent propulseur allumé dans le générateur de gaz, et le compartiment intérieur de piston étant conçu comme un compartiment de comoustion pour les agents propulseurs sortant du générateur de gaz, caractérisé en ce que le tuyau de guidage (7) est appuyé de façon fixe, et en ce qu'il est prévu sur l'extrémité du piston, dans le sens d'entraînement, un dispositif de blocage de recul (9) qui peut être amené en prise, bloquant le mouvement du piston avec la paroi interne du tuyau de guidage (7), pour le blocage d'un déplacement de piston dans le sens contraire au sens d'entraînement.

2. Dispositif selon la revendication 1, caractérisé en ce que le compartiment de pression (6) est fermé sur l'extrémité du tuyau de guidage (7) par un élément de fermeture (8) qui se présente sous la forme d'un filtre pour des résidus de combustion.

3. Dispositif selon la revendication 1 ou 2, caractérisé en ce que le dispositif de blocage de recul (9) présente un élément de blocage (10), extensible radialement par rapport à l'axe du tuyau de guidage (7), qui est guidé sur une pièce ajoutée conique (11) du piston (2) de telle façon que l'élément de blocage (10) peut être guidé librement dans le sens d'entraînement sur la paroi interne du tuyau de guidage (7) et, dans le cas d'un mouvement de piston dirigé dans le sens contraire au sens d'entraînement, peut être élargi par la pièce ajoutée (11) conique pour un engrènement de blocage avec la paroi interne du tuyau de guidage (7).

4. Dispositif selon la revendication 3, caractérisé en ce que la pièce ajoutée conique (11) a une conception creuse et présente en cet endroit au moins un orifice de sortie (5).

5. Dispositif selon la revendication 3 ou 4, caractérisé en ce que la paroi interne du tuyau de guidage (7) présente des rainures (12) périphériques avec lesquelles l'élément de blocage (10) élargi peut être amené en prise.

6. Dispositif selon l'une quelconque des revendications 3 à 5, caractérisé en ce que l'élément de blocage (10) présente un bord (13) pointu qui s'engage avec la paroi interne du tuyau de guidage (7) lors de l'élargissement de la bague.

7. Dispositif selon l'une quelconque des revendications 3 à 6, caractérisé en ce que l'élément de blocage (10) est installé avec une précontrainte sur la pièce ajoutée conique (11).

8. Dispositif selon l'une quelconque des revendications 1 à 7, caractérisé en ce que le générateur de gaz (1) est conçu de manière que le gaz propulseur sorte en au moins deux étapes, le gaz sortant pendant la première étape exerçant un effet d'entraînement réduit par rapport au gaz de la deuxième étape suivante ou aux étapes consécutives sur le piston (2).

9. Dispositif selon l'une quelconque des revendications 1 à 8, caractérisé en ce que le générateur de gaz (1) présente un dispositif d'allumage (14) électrique.

10. Dispositif selon l'une quelconque des revendications 1 à 9, caractérisé en ce que les moyens de traction (15) sont conçus comme un câble de traction et sont appuyés de façon fixe sur le piston (2) par l'intermédiaire d'un dispositif de compression de câble (17) qui présente un diamètre supérieur au câble de traction.

11. Dispositif selon l'une quelconque des revendications 1 à 10, caractérisé en ce que le piston (7) est appuyé sur l'élément de fermeture (8) en service normal.

12. Dispositif selon la revendication 10, caractérisé en ce que le au moins un orifice de sortie (5) est disposé dans une bague d'appui (19) grâce à un évidement formé sur le dispositif de compression de câble (17), laquelle bague est appuyée de façon fixe sur le fond de piston à l'intérieur du piston.

13. Dispositif selon l'une quelconque des revendications 3 à 12, caractérisé en ce que la pièce ajoutée conique (11) est formée à l'extérieur sur le fond de piston (18).

14. Dispositif selon l'une quelconque des revendications 1 à 13, caractérisé en ce que, sur l'extrémité du mouvement du piston (7), les moyens de traction (15) sont guidés sur le piston dans le sens d'entraînement, de façon ralentie et permettant de continuer de se déplacer.

15. Dispositif selon la revendication 14, caractérisé en ce que, entre le piston (7) et le dispositif de compression de câble (17), il est prévu un frein (16) qui ralentit le déplacement ultérieur du dispositif de traction (15) par rapport au piston (7) arrêté.
